# EUROPÄISCHE PATENTSCHRIFT

(11) **EP 0 968 783 B1**
(45) Veröffentlichungstag und Bekanntmachung des Hinweises auf die Patenterteilung: **11.09.2002**
(21) Anmeldenummer: 99250191.6
(22) Anmeldetag: 16.06.1999
(51) Int. Cl.: B23B 29/034

(54) **Kurzklemmhalter mit radialer Feinverstellung**
Tool holder with radial fine positioning
Porte-plaquette avec positionnement fin radial

(30) Priorität: 16.06.1998 DE 19827778
(43) Veröffentlichungstag der Anmeldung: 05.01.2000
(73) Patentinhaber: Johne + Co. Präzisionswerkzeuge GmbH, 46286 Dorsten (DE)
(72) Erfinder: Johne, Frank, 01561 Grosshain-Zschauitz (DE)
(74) Vertreter: Effert, Bressel und Kollegen

(56) Entgegenhaltungen:
- DE-A- 3 530 696
- DE-A- 3 926 026
- US-A- 3 363 299
- US-A- 3 755 868

## Beschreibung

Die Erfindung bezieht sich auf ein Rotations-Werkzeug, insbesondere einen Kurzklemmhalter mit Standardschneidplatten.

Ein ähnliches Werkzeug ist aus Fig. 1 der US-PS 3 236 125 bekannt. Der Halter ist dabei unmittelbar mit der Befestigungsschraube in einer Ausnehmung einer Bohrstange festgelegt, wobei er mit einer hinteren Seitenkante an einer die Abstützung bildenden Fläche der Ausnehmung anliegt, während eine in den vorderen Teil des Halters eingeschraubte Abdrückschraube an einer entsprechenden Stelle der Fläche der Ausnehmung Widerlager findet. Wird der Halter durch die Abdrückschraube zur radialen Verstellung der Schneidplattenposition mehr oder weniger gebogen, so tritt zugleich auch eine Verschwenkung des Halters in seinen vorderen Teil und durch eine unerwünschte Änderung des sog. Einstellwinkels ein. Um diesen Nachteil zu beheben, wird in der US-PS 3 236 125 eine grundsätzlich andere Ausführung eines Werkzeughalters vorgeschlagen. Hierbei erfolgt keine elastische Verbiegung des Halters mehr, sondern es wird eine Änderung des Abstandes von einer Abstützfläche an der Bohrstange durch Verschieben eines in seiner Abmessung etwa dem Halter entsprechenden Keilstück bewirkt, wobei dieses und der Halter mit Bezug auf die Abstützfläche geneigte Flächen aufweisen. Die Längsverstellung des Keilstückes geschieht mittels einer im Halter befindlichen Exenteranordnung.

Die Einstellung dieses bekannten Halters geschieht mit Hilfe einer Spezialvorrichtung, wozu der Halter von der Bohrstange abgenommen werden muß. In der Betriebsposition an der Bohrstange kann eine Ein- oder Nachstellung nicht erfolgen, weil der Halter zusammen mit dem Keilstück an der Bohrstange festgeschraubt wird, so daß dann keine Relativbewegung zwischen dem Halter und dem Keilstück mehr möglich ist.

Aus der DE-OS 16 27 021 ist eine einstellbare Bohrstange bekannt, bei der auf einem Halter eine Schneidplatte befestigt ist, der Halter selbst mit Schrauben, die orthogonal zur Rotationsachse der Bohrstange im Basiskörper des Werkzeugschaftes angeordnet sind, fest verschraubt wird. Vor Kopf der Bohrstange ist in Parallelrichtung zum Halter und zur Achse der Bohrstange eine Schraube angeordnet, die in einem Gewinde des Basiskörpers bewegbar ist und dabei einen balligen Gleitkörper in Achsrichtung der Bohrstange bewegt. Damit wird Schneidplatte radial auswärts auslenkt zur Erzeugung größerer Bohrdurchmesser. Diese Anordnung hat mehrere Nachteile, die Verschraubung des Halters mit zwei Schrauben ist kompliziert eine achsiale Verschiebung des Halters ist nicht möglich, um z.B. Stufenbohrungen einzubringen. Durch die zum Halter parallele Verschiebung des balligen Gleitkörpers ist der Angriffspunkt für die Auslenkung des Halters und damit der Schneidplatte variabel in Bezug auf seine Fixpunkte zum Basiskörper. Dadurch ergibt sich bei einem bestimmten Drehwinkel der Verstellschraube eine unterschiedlich radiale Auslenkung der Schneidplatte. Eine Einstellung im µm-Bereich ist nicht möglich.

Aus der DE 35 30 696 A1 ist ein gattungsbildender Stand der Technik bekannt, bei dem unter Vorspannung mit Hilfe einer Parallelfeder eine Auslenkung der dort auf den federnden Halter geschraubten Schneidplatte möglich ist. Der Halter selbst ist durch Schweißen oder sonstwie mit einer kassettenartigen Basis des Halters, der Feder und seiner Verstelleinrichtung verbunden, so daß eine voreingestellte Kassette komplett in eine Bohrstange eingebaut werden kann. Die Schneidplatte kann auch im eingebauten Zustand der Kassette verstellt werden. Probleme bereitet es mit derartigen Systemen, kleine Bohrungen zu erzeugen, da die Kassette an sich schon Abmessungen hat, die nicht für kleine Bohrungen geeignet ist. Des weiteren ist auch durch die Verstellschraube zunächst ein Keilkörper zu bewegen, der seinerseits dann den Halter verstellt. Durch diese Anordnung ergibt sich zwangläufig ein zusätzliches Spiel; der stick-slip-Effekt ist zwar auf ein Minimum reduziert, jedoch lassen sich so allenfalls Radialverstellungen im Bereich von 10 µm oder größer erreichen.

Dasselbe gilt für die kassettenartige Anordnung gemäß der DE 22 35 782 C2, bei der eine Kassette unter Federverspannung mit Hilfe entsprechender Keilflächen und Druckschrauben so verstellt werden kann, daß der Bohrdurchmesser geringfügig größer oder kleiner gestaltet wird. Auch in diesem Fall hindert die Patronenform daran, kleinere Bohrungen zu erzeugen. Außerdem wirken die Federn nicht primär gegen die Verstelleinrichtung, so daß eine Verstellung allenfalls mit einer Genauigkeit im Bereich von einigen zehntel mm möglich ist. Der Wirkbereich von Feinbohrelementen liegt bei einer Verstell-Genauigkeit von kleiner 10 µm.

Aus der DE 39 26 026 A1 sind Feinbohrköpfe bekannt, bei denen ein für kleine Bohrungen geeigneter schaftartiger Schneidplattenträger gegen Federwirkung radial verstellbar ist. Derartige Feinbohrköpfe oder Feinbohrpatronen sind jedoch teuer. Mit diesen Feinbohrköpfen kann man nicht in einem Durchgang mehrstufige Bohrungen herstellen, was in der Regel durch Kurzklemmhalter möglich ist.

Aufgabe der Erfindung ist es, bestehende Unzulänglichkeiten und Nachteile zu überwinden und ein Werkzeug nach Art eines Kurzklemmhalters zu schaffen, das im einsatzbereiten Zustand eine leichte radiale Verstellung der Schneidplatte im Genauigkeitsbereich von wenigen µm gestattet, und zwar, ohne daß dabei der sog. Einstellwinkel (kappa) eine unzulässige Änderung erfährt. Das Werkzeug soll ferner einfach ausgebildet sein und sich insbesondere auch verhältnismäßig klein bauen lassen, so daß es selbst unter beengten Platzverhältnissen eingesetzt werden kann, namentlich als Feinbohrelement. Mit alledem zusammenhängende weitere Probleme, mit denen sich die Erfindung befaßt, ergeben sich aus der jeweiligen Erläuterung der aufgezeigten Lösung.

Die beiden Lösungen der Erfindung ergeben sich aus den in den Ansprüchen 1 und 3 angegebenen Merkmalen. Weiterbildungen der Erfindung sind in den Unteransprüchen erfaßt.

Ein solches Werkzeug stellt eine kleinbauende Einheit dar. Seine Abmessungen lassen sich so wählen, daß es auch für geringe Bohrlochdurchmesser geeignet ist. Dabei ist ohne weiteres auch eine axiale Einstellbarkeit zu verwirklichen, wie sie vielfach notwendig ist, um z.B. stufenförmige Bohrungen zu erzeugen. Bei alle dem zeichnet sich das Werkzeug aber durch eine besonders vorteilhafte Einstellbarkeit in radialer Richtung aus, ohne daß dabei nicht erwünschte Beeinflussungen anderer Größe, insbesondere des Einstellwinkels, eintreten. Dies ist in einer Ausführungsform durch die Ausbildung des Halters als parallele Biegefeder-Anordnung erreicht. Darunter ist eine Ausgestaltung zu verstehen, bei der unter Anwendung einer elastischen Biegung von Partien des Halters dessen Kopfteil, d.h. der die Schneidplatte tragende Teil, im wesentlichen eine Parallelverschiebung zu sich selbst erfährt.

Die Ausbildung läßt sich so treffen, daß der Halter im ausgelenkten Zustand im wesentlichen unbelastet ist und eine elastische Rückstellkraft, die einer Auslenkung entgegenwirkt, erst entsteht, wenn die Verstellvorrichtung aus einer Null- oder Ausgangsposition heraus betätigt wird. Mit besonderem Vorteil wird aber der Halter bereits im nicht ausgelenkten Zustand schon unter Vorspannung gehalten, so daß von vornherein eine Spielfreiheit gewährleistet ist. Dies läßt sich dadurch erreichen, daß der eine Feder bildende Halter fest mit dem Basiskörper verschraubt wird und dabei unmittelbar an der Stellschraube anliegt.

Für die zu dieser Parallelfeder-Ausbildung vorgesehene Durchbrechung bestehen verschiedene Ausführungsmöglichkeiten, namentlich solche mit Ausnehmung in den Eckbereichen, die Kerbspannungen verhindern. Bei einer sehr günstigen Ausführungsform hat die Durchbrechung im wesentlichen die Form eines U mit zentraler Befestigungszunge.

Die Verstellvorrichtung ist als Schraube ausgebildet, die in ein Gewinde des Basisteiles eingreift und sich am Basisteil abstützt. Bei einer besonderes zweckmäßigen Ausführungsform weist die Stellschraube mit dem Halter eine solche Keilflächenpaarung auf, daß keine Selbsthemmung eintreten kann. Dadurch können beim Drehen der Schraube in Löserichtung infolge der hohen Vorspannung die Keilflächen gleiten, d.h. der Halter bleibt stets in Anlage an der Schraube.
Die Keilflächenpaarung zwischen Halter und Verstellschraube kann beispielsweise durch einen balligen oder konischen Abschnitt der Schraube, gepaart mit vertikalem Abschnitt des Halters aber auch umgekehrt oder durch Mischformen erzeugt werden. Wichtig ist der direkte Kontakt der Elemente und deren Wirkrichtung zueinander.
Mit einer derartigen Verstellvorrichtung ist es möglich, die Schneidplatte radial feiner als 3 µm auszulenken und entsprechend genaue Bohrungen zu erzeugen. Die Wiederholgenauigkeit ist so exakt, daß die Bewegung der Verstellschraube an einer daran angeordneten ringförmigen Skalierung relativ zu einem Bezugspunkt am Basiskörper einer entsprechenden Radialverstellung der Schneide zugeordnet werden kann. Ein Bogenmaß von 1mm an der Schraube entspricht z.B. 1/1000 mm an der Schneide. Diese Wiederholgenauigkeit ist Voraussetzung, um mit preiswerten Werkzeugen, wie einem Standard-Kurzklemmhalter, die von DIN/ISO 9000 ff geforderten Qualitätsbedingungen einzuhalten. Hier liegt die Forderung bei einer Einstellgenauigkeit von 10 µm oder feiner. Der kleinste realisierbare Bohrdurchmesser liegt etwa bei 10 mm.

Eine zweite und preiswertere Variante der Lösung läßt eine Zustellung von 5 ,um oder feiner zu. Hier ist anstelle einer Parallelfeder der Halter mit einer sehr steifen Feder, vorzugsweise einer Tellerfeder, am Basiskörper festgelegt. Die Verstelleinrichtung ist wie bei der ersten Lösung gestaltet und sie verstellt den Halter durch radiale Auslenkung der Schneidspitze gegen die Wirkung der Tellerfeder. Dazu ist die Befestigungsschraube für den Halter in Orthogonalrichtung zur Rotationsachse des Werkzeuges anzuordnen, kann jedoch zur Auslenkrichtung in Ebene der Schneidplattenoberseite um 0° - 45° geschwenkt sein, wenn dies aus konstruktiven Gründen erforderlich ist.

Die Verstellschraube sitzt auf jeden Fall etwa vertikal zur Rotationsachse und etwa vertikal zur Schneidplattenebene und ist möglichst nahe hinter der Schneidkante angeordnet, um die Verstellkraft ohne große Momente direkt am Halter in Höhe der Schneidplatte ausüben zu können.

Damit ist einer Forderung des Marktes Rechnung getragen, preiswerte Werkzeuge für eine Massenfertigung bei hoher Funktionsgenauigkeit und Produktionssicherheit bereitzustellen. Mit der Erfindung kann eine DIN-Standard Kurzklemmhalter so modifiziert werden, daß mit diesem Werkzeug eine definierte Feinverstellung der Schneidplatte möglich ist.

Weitere Einzelheiten und Vorteile der Erfindung ergeben sich aus der nachstehenden Erläuterung von Ausführungsbeispielen und der zugehörigen Zeichnung. Es zeigen:
- Figur 1: einen standardisierten Kurzklemmhalter mit schematischer Darstellung einer erfindungsgemäßen Anordnung;
- Figur 2: eine vergrößerte Draufsicht mit Teilschnitt in geringfügig modifizierter Ausführung analog Figur 1;
- Figur 3: einen Schnitt III - III gemäß Figur 2 durch eine erfindungsgemäße Werkzeuganordnung;
- Figur 4: eine Draufsicht auf eine zweite Lösung der Erfindung;
- Figur 5: einen Schnitt V - V gemäß Figur 4.

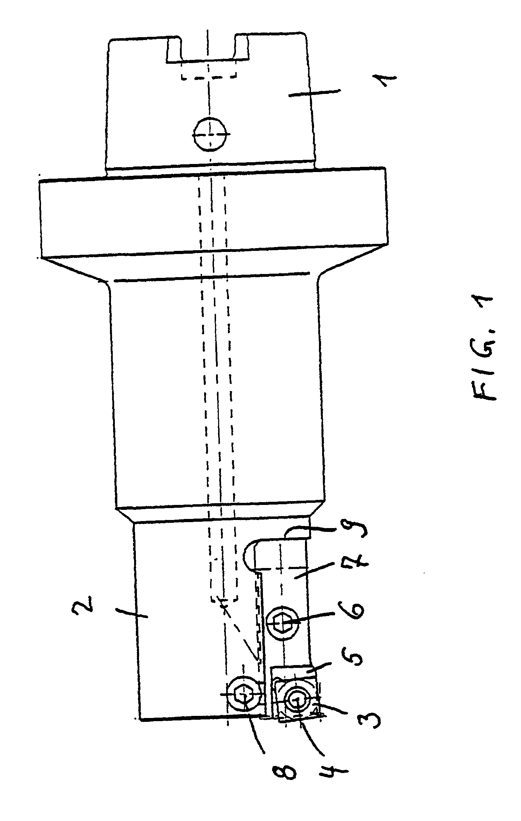

Figur 1 zeigt einen Kurzklemmhalter mit Maschinenschaft 1 und Werkzeugschaft 2 mit Halter 5, auf dem eine Schneidplatte 3 durch Schraube 4 festgesetzt ist. Der Halter ist zusammen mit einer Abdeckung 7 mittels Schraube 6 in Werkzeugschaft 2 fixiert und stützt sich gegen eine Kante 9 des Werkzeugschaftes ab. Die Verstellschraube 8 ermöglicht eine Auslenkung der Schneidplatte 3, um einen geringfügig anderen Radius einer zu erzeugenden Bohrung einzustellen.

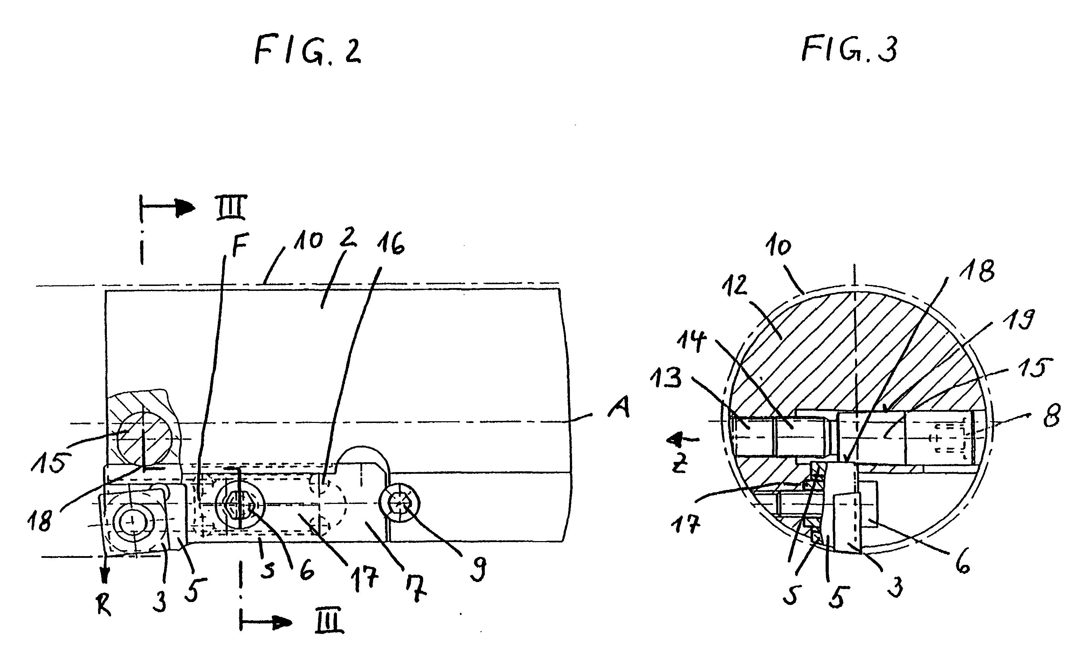

Figur 2 zeigt den Werkzeugschaft 2 analog Figur 1 mit dessen Achse A, die gleichzeitig die Rotationsachse ist, wobei das Werkzeug mittels der Schneidplatte 3 eine Bohrung 10 erzeugt, die im Durchmesser durch Auslenkung der Schneidplatte in Richtung R variierbar ist. Die Auslenkung der Schneid platte in Richtung R geschieht durch die Schraube 8 (Figur 3), welche an einem gewindelosen Teil 15 in Kontakt mit einer komplementären Druckzone 18 des Halters 5 ist. Durch Verstellung der Schraube mit der konischen Druckzone 15 (Figur 3) in Richtung Z des Gewindeloches 13 im Basiskörper und entsprechendes Verschieben des Gewindezapfens 14 der Schraube 8 in diesem Gewindeloch wandert die Druckzone 15 in Richtung Z und drückt so auf die Druckzone 18 des Halters 5 mit der Folge einer radialen Verstellung der Schneidplatte 3. Dabei stützt sich die Druckzone 15 mit ihrer dem Halter gegenüberliegenden Schulter 19 an dem Körperteil 12 des Werkzeugschaftes ab. Der Halter 5 besteht im wesentlichen aus einem Teil, auf dem die Schneidplatte 3 befestigt ist und zwei Schenkeln s, begrenzt von einer U-förmigen Fuge F, die an drei Seiten der mittigen Zunge 17, die Entspannungsbohrungen 16 miteinander verbindet und so eine Parallelfeder bildet. Die Zunge 17 ist mittels Schraube 6 in dem Basisteil 12 des Werkzeugschaftes 2 fixiert, wobei die Schneidplatte 3 aufgrund der Fugenanordnung einer Parallelbewegung in Richtung R ausführen kann, soweit die Verstellung der Stellschraube 8 dies ermöglicht. Gegenüber Werkzeugschaft 2 ist der Halter 5 in Achsialrichtung verstellbar, um so die Schneidplatten in eine bestimmte Position relativ zum Werkzeugschaft 2 positionieren zu können. Dies ist sinnvoll, wenn beispielsweise auf der gegenüberliegenden Seite des Werkzeugschaftes 2 eine weitere Schneidplatte in anderem Achsialabstand von dem Kopf des Werkzeugschaftes angeordnet wird, um so eine zweistufige Bohrung zu erzeugen. Damit eine gewisse Achsialeinstellung durch die Schraube 9 möglich ist, sitzt die Schraube 6 in einem Langloch in der Zunge 17. Die Parallelfeder oder der Halter 5 ist durch eine Abdeckung 7 abgedeckt, damit die Fuge F nicht durch Späne und Fremdkörper zugesetzt werden kann.

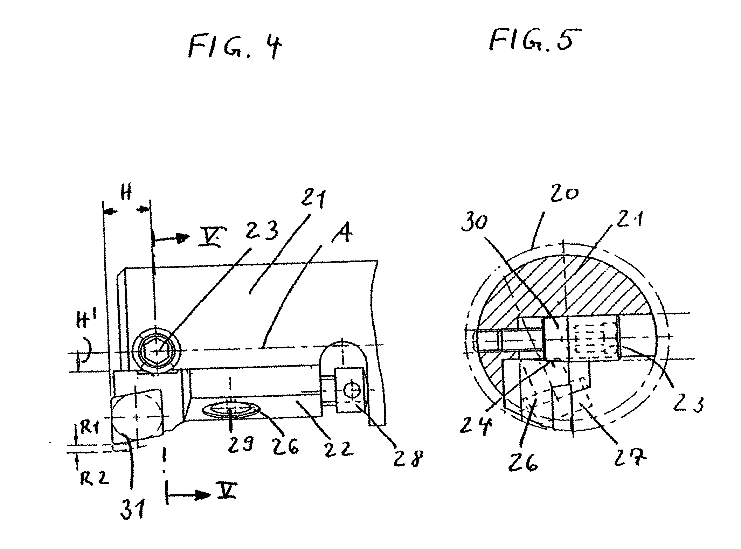

Figur 4 zeigt analog Fig. 2 die zweite Lösung der Erfindung. Der Werkzeugschaft 21 mit Achse A trägt einen Halter 22 mit Bohrung 29 durch die der Halter unter Zwischenfügung einer Tellerfeder 26 mit einer Schraube 27 (Fig. 5) an dem Schaft 21 fixiert werden kann, sobald die Distanzschraube 28 für die axiale Lage der Schneide 31 eingestellt ist. Die Verstellschraube 23 ist in einem kurzen Abstand H hinter der Schneidkante an der Rückseite des Halters im Schaft 21 angeordnet. Fig. 5 gemäß Schnitt V-V in Fig. 4 zeigt an der Schraube 23 einen gewindelosen balligen Abschnitt 30 der auf eine komplementäre Keilfläche 24 am Halter 22 drückt und so eine Verstellung der Schneide 31 vom Radius R1 für die Bohrung 20 zum Radius R2 ermöglicht. Die Verstellung erfolgt gegen die Rückstell-Kraft der Feder 26, so daß eine ständiges Anliegen der Keilflächenpaarung in den Druckzonen von Verstellschraube und Halter (Bezugsziffern 30, 24) gewährleistet ist. Auch hier kann der Kopf der Schraube 23 mit einer Skala versehen sein, die bei entsprechendem Drehwinkel die Radialverstellung anzeigt.

Bei beiden erfindungsgemäßen Lösungen wird das Gewinde der Verstellschraube selbst und / oder das Komplementärgewinde im Schaft weitestgehend spielfrei eingestellt oder durch besondere Maßnahmen wie HELICOIL-Einsätze, Schlitzen der Gewindebüchse oder Beschichten, Behandeln der Gewindeflanken, die Gewindepaarung spielfrei gemacht.

## Patentansprüche

1. Rotations-Werkzeug (1, 2) für die spanabhebende Bearbeitung mit einem Halter (5), der in seinem vorderen Teil (2) wenigstens eine Aufnahme für eine Schneidplatte(3), und im Bereich zwischen seinen Enden ein Loch zum Durchtritt einer Befestigungsschraube (6) aufweist, mit der er auf einem Träger (2), insbesondere einer Bohrstange festlegbar ist, wobei der Halter (5) an seinem die Schneidplatte (3) tragenden Teil mittels einer Verstellvorrichtung relativ zu einer Abstützung (2,12) elastisch auslenkbar ist, der Halter (5) mit einer Durchbrechung (16, F) versehen ist und eine Parallel-Biegefeder-Anordnung bildet (5 - 9, 16,17, F, s), so daß die Schneidplatte (3) während ihrer Verstellung im wesentlichen eine Parallelverschiebung (R) in bezug auf die Schneidkante erfährt, **dadurch gekennzeichnet, daß** die Verstellvorrichtung als Stellschraube (8) ausgebildet ist, die den Träger (2) unmittelbar hinter dem Halter (5) durchgreift und zwischen der Abstützung (12,19) im Träger (2) einerseits und einem Gewinde (13) im Träger für ein Gewinde (14) der Stellschraube (8) andererseits an einem gewindelosen Umfangsteil eine Druckzone (15) aufweist, die gemeinsam mit einer komplementären Druckzone (18) am Halter (5) ein unter Vorspannung stehendes Keilflächenpaar bildet.

2. Werkzeug nach Anspruch 1, **dadurch gekennzeichnet, daß** die Durchbrechung (F) im wesentlichen U-förmig ist.

3. Rotations-Werkzeug für die spanabhebende Bearbeitung mit einem Halter (22), der in seinem vorderen Teil wenigstens eine Aufnahme für eine Schneidplatte (31) und im Bereich zwischen seinen Enden ein Loch (29) zum Durchtritt einer Befestigungsschraube (27) aufweist, mit der er auf einem Träger (21), insbesondere einer Bohrstange festlegbar ist, wobei der Halter (22) an seinem die Schneidplatte (31) tragenden Teil mittels einer Verstellvorrichtung relativ zu einer Abstützung (21) auslenkbar ist, **dadurch gekennzeichnet, daß** die Befestigungsschraube ( 27) gegen eine starke Feder (26), vorzugsweise eine Tellerfeder, in den Träger (21) geschraubt ist, die Verstellvorrichtung als Stellschraube (23) ausgebildet ist, die an einem gewindelosen Umfangsteil (30) eine Druckzone aufweist, die gemeinsam mit einer komplementären Zone (24) am Halter (22) ein Keilflächenpaar bildet und die Achse der Befestigungsschraube (27) *in Orthogonal-Richtung* zur Rotationsachse (A) des Werkzeuges und unter 0°- 45° zur Richtung der Auslenkung der Schneidplatte (31) angeordnet ist.

4. Werkzeug nach Anspruch 1 oder 3, **dadurch gekennzeichnet, daß** der Halter (5, 22 ) unter Vorspannung mit dem Basiskörper (2, 21) verschraubt ist.

5. Werkzeug nach einem der vorhergehenden Ansprüche, **dadurch gekennzeichnet, daß** die Keilfläche (18, 24) an der Druckzone des Halters (5, 22) vorgesehen ist und die Druckzone (15, 30) der Schraube (8, 23) zylindrisch oder ballig ist.

6. Werkzeug nach einem der vorhergehenden Ansprüche, **dadurch gekennzeichnet, daß** die Keilflächenpaarung (15, 18; 24, 30) zwischen Halter (5,22) und Verstellschraube (8, 23) durch einen balligen oder konischen Abschnitt der Schraube, gepaart mit vertikalem Abschnitt des Halters oder umgekehrt oder durch Mischformen gebildet ist.

7. Werkzeug nach einem der vorhergehenden Ansprüche, **dadurch gekennzeichnet, daß** die Keilflächenpaarung selbsthemmungsfrei ist.

8. Werkzeug nach einem der vorhegehenden Ansprüche, **dadurch gekennzeichnet, daß** am Kopf der Stellschraube (8, 23) eine ringförmige Skalierung und am Basiskörper (2, 21) eine Bezugsmarke für die Skalierung vorgesehen ist.

## Claims

1. Rotary tool (1, 2) for metal-cutting purposes, having a holder (5) which includes, in its front part (2), at least one receiving means for a cutting plate (3) and, in the region between its ends, a hole for a securing screw (6) to pass therethrough, by means of which screw said holder is securable on a carrier (2), more especially a drilling rod, the holder (5) being, at its part carrying the cutting plate (3), resiliently deflectable relative to a support (2, 12) by means of an adjusting device, the holder (5) being provided with an opening (16, F) and forming a parallel spiral spring arrangement (5 - 9, 16, 17, F, s) so that the cutting plate (3), during its adjustment, experiences substantially a parallel displacement (R) relative to the cutting edge, **characterised in that** the adjusting device is in the form of adjusting screw (8), which extends through the carrier (2) directly behind the holder (5) and has, on a threadless circumferential member between the support (12, 19) in the carrier (2), on the one hand, and a thread (13) in the carrier for a thread (14) of the adjusting screw (8), on the other hand, a pressure zone (15) which forms a pair of wedge surfaces, which is subject to initial tension, jointly with a complementary pressure zone (18) on the holder (5).

2. Tool according to claim 1, **characterised in that** the opening (F) is substantially U-shaped.

3. Rotary tool for metal-cutting purposes, having a holder (22) which includes, in its front part, at least one receiving means for a cutting plate (31) and, in the region between its ends, a hole (29) for a securing screw (27) to pass therethrough, by means of which screw said holder is securable on a carrier (21), more especially a drilling rod, the holder (22) being, at its part carrying the cutting plate (31), deflectable relative to a support (21) by means of an adjusting device, **characterised in that** the securing screw (27) is screwed into the carrier (21) in opposition to a strong spring (26), preferably a plate spring, the adjusting device is in the form of adjusting screw (23), which has, on a threadless circumferential member (30), a pressure zone which forms a pair of wedge surfaces jointly with a complementary zone (24) on the holder (22), and the shaft of the securing screw (27) is disposed *in the orthogonal direction* relative to the axis of rotation (A) of the tool and at 0° - 45° relative to the direction of deflection of the cutting plate (31).

4. Tool according to claim 1 or 3, **characterised in that** the holder (5, 22) is screw-connected to the basic body member (2, 21) with initial tension.

5. Tool according to one of the preceding claims, **characterised in that** the wedge surface (18, 24) is provided at the pressure zone of the holder (5, 22), and the pressure zone (15, 30) of the screw (8, 23) is cylindrical or spherical.

6. Tool according to one of the preceding claims, **characterised in that** the wedge surface pairing (15, 18; 24, 30) between holder (5, 22) and adjusting screw (8, 23) is formed by a spherical or conical portion of the screw, paired with a vertical portion of the holder, or vice versa, or by mixed shapes.

7. Tool according to one of the preceding claims, **characterised in that** the wedge surface pairing is reversible.

8. Tool according to one of the preceding claims, **characterised in that** an annular scale is provided on the head of the adjusting screw (8, 23), and a reference mark for the scaling is provided on the basic body member (2, 21).

## Revendications

1. Outil rotatif (1, 2) pour le traitement par enlèvement de copeaux avec un porte-outil (5), qui présente dans sa partie antérieure (2) au moins un évidement pour une plaque de découpage (3) et dans la zone entre ses extrémités un trou pour le passage d'une vis de fixation (6), avec laquelle il peut être fixé sur un support (2), en particulier une tige porte-foret, le porte-outil (5) pouvant être écarté élastiquement au niveau de sa partie portant la plaque de découpage (3) par rapport à un appui (2, 12) au moyen d'un dispositif de réglage, le porte-outil (5) étant pourvu d'un passage (16, F) et formant une disposition à ressort en spirale parallèle (5-9, 16, 17, F, s), de telle manière que la plaque de découpage (3) subit pendant son réglage essentiellement un déplacement parallèle (R) par rapport à l'arête coupante, **caractérisé en ce que** le dispositif de réglage est exécuté sous forme de vis de réglage (8) qui traverse le support (2) directement derrière le porte-outil (5) et qui présente entre l'appui (12, 19) dans le support (2) d'une part et un taraudage (13) dans le support pour le filetage (14) de la vis de réglage (8) d'autre part, sur une partie périphérique exempte de taraudage, une zone de pression (15) qui forme, ensemble avec une zone de pression complémentaire (18) sur le porte-outil (5), une paire de surfaces en coin se trouvant sous précontrainte.

2. Outil selon la revendication 1, **caractérisé en ce que** le passage (F) est essentiellement en forme de U.

3. Outil rotatif pour le traitement par enlèvement de copeaux avec un porte-outil (22), qui présente dans sa partie antérieure au moins un évidement pour une plaque de découpage (31) et dans la zone entre ses extrémités un trou (29) pour le passage d'une vis de fixation (27), avec laquelle il peut être fixé sur un support (21), en particulier une tige porte-foret, le porte-outil (22) pouvant être écarté au niveau de sa partie portant la plaque de découpage (31) par rapport à un appui (21) au moyen d'un dispositif de réglage, **caractérisé en ce que** la vis de fixation (27) est vissée contre un ressort (26) fort, de préférence un ressort à disque, dans le support (21), le dispositif de réglage est exécuté en tant que vis de réglage (23), qui présente une zone de pression au niveau d'une partie périphérique (30) exempte de filetage, qui forme ensemble avec une zone complémentaire (24) sur le porte-outil (22) une paire de surfaces en coin et l'axe de la vis de fixation (27) est disposé dans le sens orthogonal par rapport à l'axe de rotation (A) de l'outil et sous un angle de 0°-45° par rapport à l'écartement de la plaque de découpage (31).

4. Outil selon la revendication 1 ou 3, **caractérisé en ce que** le porte-outil (5, 22) est vissé sous précontrainte avec le corps de base (2, 21).

5. Outil selon l'une quelconque des revendications précédentes, **caractérisé en ce que** la surface en coin (18, 24) est prévue au niveau de la zone de pression du porte-outil (5, 22) et la zone de pression (15, 30) de la vis (8, 23) est cylindrique ou bombée.

6. Outil selon l'une quelconque des revendications précédentes, **caractérisé en ce que** la paire de surfaces en coin (15, 18 ; 24, 30) entre le porte-outil (5, 22) et la vis de réglage (8, 23) est formée par une section bombée ou conique de la vis, allant de pair avec une section verticale du porte-outil ou inversement ou par des formes mixtes.

7. Outil selon l'une quelconque des revendications précédentes, **caractérisé en ce que** la paire de surfaces en coin est exempte d'un blocage automatique.

8. Outil selon l'une quelconque des revendications précédentes, **caractérisé en ce qu'**on a prévu à la tête de la vis de réglage (8, 23) une échelle annulaire et sur le corps de base (2, 21) un repère pour l'échelle.
